# EUROPÄISCHE PATENTANMELDUNG

(11) **EP 4 074 984 A1**
(43) Veröffentlichungstag der Anmeldung: **19.10.2022**
(21) Anmeldenummer: 22167863.4
(22) Anmeldetag: 12.04.2022
(51) Int. Cl.: F15B 1/26

(54) **HYDRAULIKBLOCK UND VERFAHREN**

(30) Priorität: 16.04.2021 DE 102021203782
(71) Anmelder: Robert Bosch GmbH, 70442 Stuttgart (DE)
(72) Erfinder: Guender, Andreas, 97729 Ramsthal (DE); Weigel, Andreas, 09405 Gornau (DE); Harth, Tobias, 97845 Neustadt (DE); Dietz, Jan, 63633 Birstein (DE)

(57) **Zusammenfassung**

Offenbart ist ein Hydraulikblock, der in drei horizontale Abschnitte gegliedert ist. Ein Blockabschnitt ist als Fußabschnitt ausgebildet, der Tankanschlüsse aufweist, insbesondere an der Unterseite. Ein Blockabschnitt ist als Mittelabschnitt ausgebildet, in oder an dem ein Pumpentriebwerk anordenbar ist. Ein weiterer Blockabschnitt ist als Kopfabschnitt ausgebildet, der zum Anschluss von zumindest einem Ventil und von zumindest einem Hydraulikanschluss dient.

## Beschreibung

Die Erfindung betrifft einen Hydraulikblock. Des weiteren betrifft Erfindung ein Verfahren dem Hydraulikblock.

### Hintergrund der Erfindung

Aus der DE 10 2018 218 113 A1 ist ein Abkanntpressenmodul bekannt. Dieses hat einen Hydraulikblock, der mit einem Tank verbunden ist. Der Hydraulickblock ist hierbei mittels einer spanenden Bearbeitung eines kubischen Metallkörpers hergestellt. Nachteilig hierbei ist das vergleichsweise hohe resultierende Gewicht, ein großer Bauraum, ein erhöhter Montageaufwand zum Verschließen von Hilfsbohrungen, eine erschwerte Entlüftung durch Totvolumen in Hilfsbohrungen und hohe Zerspanzeiten.

### Offenbarung der Erfindung

Demgegenüber liegt der Erfindung die Aufgabe zugrunde, eine Hydraulikblock zu schaffen, bedient die oben genannten Nachteile beseitigt sind. Außerdem ist es die Aufgabe der Erfindung ein kostengünstiges und einfaches Verfahren zur Herstellung des Hydraulikblocks zu schaffen.

Die Aufgabe hinsichtlich des Hydraulikblocks wird gelöst gemäß den Merkmalen des Anspruchs 1 und hinsichtlich des Verfahrens gemäß den Merkmalen des Anspruchs 10.

Vorteilhafte Weiterbildungen der Erfindung sind Gegenstand der Unteransprüche.

Erfindungsgemäß ist ein Hydraulikblock, der insbesondere als Anschluss- und Steuerblock ausgestaltet ist, vorgesehen. Diese ist in drei übereinander angeordnete Blockabschnitte gegliedert. Ein Blockabschnitt kann hierbei als Fußabschnitt ausgebildet sein. Dieser hat vorzugsweise einen, insbesondere unterseitigen, Rücklauf- oder Ablaufanschluss und einen Sauganschluss. Die Anschlüsse können in Wirkverbindung mit einem Tank stehen. Ein weiterer Blockabschnitt ist vorzugsweise als Mittelabschnitt ausgebildet. Dieser hat eine Aufnahmeöffnung für ein Pumpentriebwerk. Des weiteren kann ein Blockabschnitt als Kopfabschnitt ausgebildet sein. Auf diesen können zumindest ein Ventil oder Ventile einer hydraulischen Steuerung und zumindest ein Verbraucheranschluss oder Verbraucheranschlüsse vorgesehen sein.

Es hat sich gezeigt, dass diese Ausgestaltung des Hydraulikblocks äußerst vorteilhaft ist. Über den Kopfabschnitt sind Ventile und Verbraucheranschlüsse einfach zugänglich. Dies ist insbesondere bei der Wartung und/oder bei der Montage vorteilhaft. Die Anordnung eines Rücklauf- und Sauganschlusses im Fußabschnitt führt dazu, dass beispielsweise ein Tank mit Abstand zu den Ventilen und Verbraucheranschlüssen anschließbar ist. Die Anordnung des Pumpentriebwerks im Mittelabschnitt ist vorteilhaft, da diese somit zum einen auf kurzem fluidischen Weg mit dem Kopfabschnitt, insbesondere mit den Ventilen und Verbraucheranschlüssen, und zum anderen auf kurzen Weg mit dem Fußabschnitt und der hierfür vorgesehenen Anschlüssen fluidisch verbunden werden kann.

Mit anderen Worten gliedert sich der Hydraulikblock horizontal drei Abschnitte es ist ein Fußabschnitt vorgesehen, mit dem Ablaufanschluss zum Tank und einem Sauganschluss. Ein Mittelabschnitt ist mit einer Aufnahmeöffnung für das Pumpentriebwerk ausgebildet. Außerdem ist ein Kopfabschnitt vorgesehen, auf dem Ventile einer hydraulischen Steuerung und Verbraucheranschlüsse ausgebildet sind.

Mit Vorteil ist der Hydraulikblock durch ein 3D-Druckverfahren hergestellt. Es hat sich gezeigt, dass die übereinander angeordneten Blockabschnitte durch das 3D-Druckverfahren äußerst kostengünstig und einfach herstellbar sind. Als besonders vorteilhaft und kostengünstig hat sich der Einsatz eines 3D-Sandkerndruckverfahren gezeigt. Beispielsweise ist beim Einsatz dieses Verfahren eine Gussform mit einem Kern und zumindest eine Wandfläche einer Außengeometrie des Hydraulikblocks mittels des 3D-Sandkerndruckverfahren hergestellt. Nach Abguss dieser Gussform ist es beispielsweise lediglich erforderlich hydraulische Schnittstellen und/oder mechanische Schnittstellen spanend zu bearbeiten und/oder Ventilsitze, insbesondere im Bereich von Dichtstellen. Als Gussmaterial kommt z.B. Gusseisen, insbesondere duktiles Gusseisen zum Einsatz. Somit hat sich das 3D-Druckverfahren, insbesondere das 3D-Sandkerndruckverfahren als äußerst vorteilhaft für die ungewöhnliche Ausgestaltung des Hydraulikblocks gezeigt.

Durch die Integration eines Pumpentriebwerks in die Aufnahme des Hydraulikblocks kann beispielsweise ein Pumpengehäuse entfallen, wodurch Kosten und vorrichtungstechnischer Aufwand gespart werden. Eine derartige Integration kann durch das 3D-Druckverfahren vergleichsweise einfach und kostengünstig ausgebildet werden.

In weiterer Ausgestaltung Erfindung hat der Fußabschnitt eine Unterseite und eine, insbesondere vollständig, umlaufende Seitenwandung.

Der Mittelabschnitt kann zwischen den zwei weiteren Blockabschnitten angeordnet sein und eine umlaufende Seitenwandung aufweisen. Der Kopfabschnitt hat vorzugsweise eine Oberseite und eine umlaufende Seitenwandung. Die Blockabschnitte sind weiter vorzugsweise als Horizontalabschnitte ausgebildet. Mit anderen Worten sind die Blockabschnitte übereinander in einer Oben-Unten-Richtung gesehen angeordnet.

Der Fußabschnitt weist vorzugsweise Befestigungsmittel auf, um diesen an einer Stützfläche, insbesondere an einem Maschinenelement, zu befestigen. Beispielsweise kann der Fußabschnitt Schraubbohrungen haben. An der Unterseite des Fußabschnitts sind vorzugsweise der Rücklauf- und der Sauganschluss der Steuerung ausgebildet. Somit kann beispielsweise über die Unterseite ein Tank angeschlossen werden. Die Seitenwandung und Oberseite des Hydraulikblocks kann somit für andere Anschlüsse und/oder Anbauten eingesetzt sein.

In weitere Ausgestaltung der Erfindung ist in der Unterseite des Fußabschnitts zusätzlich oder alternativ ein Ablaufanschluss ausgebildet, der vorzugsweise großvolumig ist. Insbesondere kann dessen Querschnitt größer als der Querschnitt des Rücklaufanschlusses sein. Beispielsweise kann dieser großvolumige Ablaufanschluss für die Funktion Eilgang-Senken für einen Hydrozylinder vorgesehen sein. Mit anderen Worten dient der Fußabschnitt zur Befestigung und weist nach unten hin die Mündungen von Sauganschluss und Rücklauf aus der Steuerung auf, wobei alternativ oder zusätzlich ein großvolumiger Rücklauf vorgesehen ist.

Bei einer bevorzugten Weiterbildung ist der Mittelabschnitt im Vergleich zum Kopf- und/oder Fußabschnitt zurückgesetzt, wodurch eine Mittelstrebe gebildet ist. Insbesondere erfolgt die Zurücksetzung und Ausbildung der Mittelstrebe dadurch, dass eine oder mehrere Seitenflächen im Bereich des Mittelabschnitts zurückgesetzt sind. Der Fußabschnitt kann somit breiter wie der Mittelabschnitt ausgebildet sein, insbesondere um eine breite Auflagefläche für die Stützfläche auszubilden. Dies ist beim Mittelabschnitt nicht notwendig, weswegen es vorteilhaft ist, diesen zurückgesetzt auszubilden, was durch das 3D-Druckverfahren oder durch einen Guss mit Hilfe des 3D-Sandkerndruckverfahrens einfach realisierbar ist. In der Mittelstrebe des Mittelabschnitts ist vorzugsweise die Aufnahmeöffnung für das Pumpentriebwerk ausgebildet. In weiterer Ausgestaltung der Erfindung ist der Mittelabschnitt derart zurückgesetzt, dass neben der Mittelstrebe zumindest eine seitliche Strebe als Stütze für den Kopfabschnitt gebildet ist. Diese dient neben der Mittelstrebe zusätzlich als Stütze für den Kopfabschnitt. Der Kopfabschnitt kann somit auf einfache Weise verbreitert ausgebildet werden.

In weiterer Ausgestaltung der Erfindung hat der Mittelabschnitt eine äußere Schrägfläche, die vorzugsweise nach oben und zur Seite weist. Dies ist vorteilhaft, da der Mittellabschnitt somit leicht zugänglich ist. Vorzugsweise weist die Schrägfläche einen Anschluss für einen Durchleitungskanal auf, der im Ablaufanschluss mündet. Somit kann beispielsweise der großvolumige Ablaufanschluss mit dem Anschluss der Schrägfläche verbunden sein. Der Durchleitungskanal und der Anschluss können entsprechend großvolumig ausgebildet sein. Durch die Schrägfläche ist der Anschluss zum einen leicht zugänglich und zum anderen kann ein großvolumiger Rücklauf direkt am Mittelabschnitt angeschlossen werden, wodurch ein fluidischer Weg zwischen dem Anschluss und dem Ablaufanschluss gering ist.

Die Schrägfläche ist weiter vorzugsweise in einem zurückgesetzten Bereich des Mittelabschnitts ausgebildet. Hierdurch ist der Anschluss vom Hydraulikblock vorzugsweise teilweise abgeschirmt und vor äußeren Krafteinflüssen geschützt. Beispielsweise erstreckt sich die Schrägfläche ausgehend von einer, insbesondere flachen und/oder sich von oben nach unten erstreckende, Seitenfläche des Hydraulikblocks. Mit anderen Worten ist von der Oberseite her ein etwa keilförmiger zurückgesetzter Bereich ausgebildet, der sich vom Kopfabschnitt bis zum Mittelabschnitt erstreckt und der zur Seitenfläche des Hydraulikblocks offen ist. Ein Raum des Bereichs kann sich in Richtung von oben nach unten verjüngen, wobei die schräge Keilfläche sich der Seitenfläche in Richtung von oben nach unten annähert. Die Keilfläche kann dann die Schrägfläche ausbilden. Weiter vorzugsweise ist die Schrägfläche zwischen zwei, insbesondere im Parallelabstand zueinander angeordneter, Innenwandungen des zurückgesetzten Bereichs des Mittelabschnitts ausgebildet. Neben dem Mittelabschnitt ist zur verbesserten Zugänglichkeit vorzugsweise auch der Kopfabschnitt oberhalb der Schrägfläche zurückgesetzt. Die Innenwandungen können sich vorzugsweise etwa in Richtung von unten nach oben erstrecken und in der Oberseite des Kopfabschnitts münden.

Der Durchleitungskanal erstreckt sich vorzugsweise über den Mittelabschnitt zum Fußabschnitt zwischen dem Anschluss der Schrägfläche und dem Ablaufanschluss. Hierdurch kann der Kopfabschnitt unabhängig vom großvolumigen Durchleitungskanal ausgebildet werden.

Durch die Schrägfläche, die beispielsweise im 45°-Winkel ausgebildet ist, kann eine Bauhöhe des Hydraulikblocks vorteilhaft reduziert sein und eine kompakte Ausgestaltung ermöglicht sein. Durch die Ausbildung des Durchleitungskanals mit dem Anschluss und Ablaufanschluss ist es nicht notwendig, diesen bei einem Tank vorzusehen. Eine an den Ablaufanschluss angeschlossene Leitung kann beispielsweise einfach frei in einen unter dem Hydraulikblock angeordneten Tank einkragen. Dies ist beispielsweise vorteilhaft, da der großvolumige Anschluss des Rücklaufs vergleichsweise hohe Kräfte auf den Hydraulikblock ausüben kann. Diese müssen somit nicht von einem hydraulischen Tank aufgenommen werden, weswegen dieser vereinfacht, beispielsweise aus Kunststoff, ausgebildet werden kann. Außerdem ist die Abdichtung, beispielsweise des Anschlusses des Rücklaufs, beim Hydraulikblock robuster und prozesssicherer ausgestaltbar im Vergleich zum Anschluss an einem Tank.

Bei einer bevorzugten Ausgestaltung weist die Aufnahme für das Pumpentriebwerk eine derartige Größe auf, dass in diese zwei unterschiedliche Pumpenbaugrößen aufnehmbar sind. Unter Pumpenbaugrößen sind beispielsweise die fachüblichen, in der Hydraulik bekannten Pumpenbaugrößen zu verstehen. Hierdurch können verschiedene Pumpen- und Motorgrößen mit einem Hydraulikblock oder Block-Guss realisiert werden.

Somit erfolgt eine Integration verschiedener Triebwerksgrößen in nur eine Aussparung im Hydraulikblock. Diese Varianz führt zu geringen Herstellungskosten, insbesondere zu geringen Verspanungskosten. Außerdem sind Stückkosten des Hydraulikblock günstiger, da ein Hydraulikblock, beispielsweise als Gussteil, für mehrere Triebwerksgrößen einsetzbar ist. Mit anderen Worten ist die Aufnahme oder der Einbauraum für das Pumpentriebwerk groß genug, zwei verschiedene Pumpenbaugrößen aufzunehmen. Vorzugsweise ist in die Aufnahme eine Anschlussplatte oder ein Aufnahmeflansch eingelegt, die die richtige Dimensionierung zum jeweils gewählten Pumpentriebwerk herstellt. In weiterer Ausgestaltung der Erfindung führt vom Pumpentriebwerk zumindest der Hochdruckkanal in den Kopfabschnitt. Denkbar wäre auch, dass bei zwei unterschiedlich großen Pumpentriebwerken nur für eines, beispielsweise für das kleinere, ein Aufnahmeflansch eingesetzt werden muss.

Alternativ oder zusätzlich ist der Hydraulikblock hinsichtlich seiner inneren hydraulischen Schnittstelle und/ hydraulischen Kerngeometrie für das Pumpentriebwerk derart ausgestaltet, dass Pumpentriebwerke mit unterschiedlicher Pumpenbaugröße einbringbar sind. Dies kann, wie vorstehend erläutert, mit einer Anschlussplatte oder einem Adapter erfolgen und/oder in dem einfach Aufnahmebohrungen in unterschiedlicher Größe eingebracht werden. Beispielsweise kann für ein Pumpentriebwerk mit einer ersten, kleinen Pumpenbaugröße eine kleine Aufnahmebohrung eingebracht sein und für ein Pumpentriebwerk mit einer größeren, zweiten Pumpenbaugröße eine größere Aufnahmebohrung eingebracht sein. Im Übrigen muss der Hydraulikblock nicht angepasst werden. Mit anderen Worten kann der Hydraulikblock beispielsweise eine Aufnahmebohrung für die Triebwerksgröße NG10 oder für die Triebwerksgröße NG18 haben. Die innenliegende Kerngeometrie des Hydraulikblocks kann so ausgestaltet sein, dass er sowohl die kleinere als auch die größere Aufnahmebohrung für das größere Triebwerk (NG18) fassen kann. Die Aufnahmebohrung wird vorzugsweise in einer CNC-Bearbeitung ausgebildet. Eine weitere Anpassung des Gussrohteils des Hydraulikblock ist vorzugsweise nicht notwendig. Mit weiteren anderen Worten kann der Hydraulikblock beispielsweise eine Aufnahmebohrung für eine kleinere Triebwerksnenngröße und für eine größere Triebwerksnenngröße aufnehmen. Die innenliegende Kerngeometrie des Hydraulikblocks kann so ausgestaltet sein, dass er sowohl die kleinere als auch die größere Aufnahmebohrung für das größere Triebwerk fassen kann.

Der Kopfabschnitt kragt vorzugsweise über den Mittelabschnitt aus. Mit anderen Worten dehnt sich der Kopfabschnitt horizontal über den Mittelabschnitt aus. Insbesondere kann der Kopfabschnitt über die Aufnahme für das Pumpentriebwerk dachförmig ragen, wodurch dieses einfach geschützt ist. Weiter vorzugsweise sind am Kopfabschnitt, insbesondere an dessen Oberseite, zumindest ein Teil oder alle notwendigen Hydraulikanschlüsse ausgebildet. Weiter vorzugsweise sind am Kopfabschnitt, insbesondere an dessen Oberseite, alle oder zumindest ein Teil oder zumindest alle notwendigen Ventile vorgesehen. Denkbar ist auch, am Kopfabschnitt, insbesondere an dessen Oberseite, einen weiteren Rücklaufanschluss auszubilden. Dieser kann insbesondere über einen Rücklaufkanal mit dem Rücklaufanschluss der Unterseite verbunden sein. Am Rücklaufanschluss an der Unterseite kann dann eine Leitung angeschlossen sein, die vorzugsweise frei in einen Hydrauliktank unter dem Hydraulikblock einkragt. Somit ist es nicht mehr notwendig, den Hydrauliktank direkt mit dem Rücklaufanschluss zu verbinden, sondern dies erfolgt einfach über den Hydraulikblock.

In weiterer Ausgestaltung der Erfindung ist vorgesehen, dass beim Kopfabschnitt, insbesondere an dessen Oberseite, ein weiterer Sauganschluss ausgebildet ist. Dieser kann über einen Saugkanal mit dem Sauganschluss der Unterseite verbunden sein. Von diesem kann entsprechend über einen Rücklaufanschluss eine Leitung befestigt sein, die in einen unterhalb des Hydraulikblocks anordenbaren Tank frei einkragen kann. Somit ist durch den Hydraulikblock ein robustes Systemdesign aufgrund der Durchführung der Tankanschlüsse geschaffen. Hierdurch kann ein mit dem Hydraulikblock verbindbarer Tank entlastet werden, um beispielsweise aus Kunststoff ausgestaltet werden. Externe Kräfte (Toleranzketten, Temperaturexpansionen) können über massive Anschlüsse am Hydraulikblock großflächig in diesen eingeleitet werden. Wie bereits angeführt ist die Abdichtung am Hydraulikblock vergleichsweise robust und prozesssicherer gegenüber der bei einem Tank.

Des Weiteren können am Kopfabschnitt beispielsweise Speicher und Filter einer hydraulischen Steuerschaltung und Verbraucheranschlüsse ausgebildet und/oder angeordnet sein. Somit können sich Ventile, Filter und sonstige zu wartende Komponenten an der Oberseite des Hydraulikblocks befinden.

Durch das 3D-Druckverfahren kann eine Bauraum- und Gewichtsoptimierung durch Wegfall von nicht benötigtem Material, wie beispielsweise an Ecken und/oder aufgrund der Pumpentriebwerksintegration, erreicht werden. Außerdem kann eine Strömungsoptimierung durch Verrundung der Verschneidungen im Kern und eine Anpassung innerer Durchmesser an Volumenströme auf einfache Weise durch das 3D-Druckverfahren erfolgen.

Hydraulikanschlüsse, insbesondere Kundenschnittstellen, sind vorzugsweise alle beim Kopfabschnitt und/oder an der Seite des Kopfabschnitts und/oder an der Schrägfläche angebracht und/oder ausgebildet. Hierdurch ist eine einfache Integration des Hydraulikblocks in eine Maschine ohne zusätzliche Modifikationen ermöglicht.

Die Anordnung der Ventile und/oder anderer Verschleißkomponenten befindet sich vorzugsweise im Kopfabschnitt, insbesondere bis auf das Pumpentriebwerk, und/oder an der Oberseite. Dies ermöglicht eine vereinfachte Wartung im Fehlerfall ohne Demontage und Ölablass des gesamten Hydrauliksystems.

Ein weiterer Vorteil des Überragens des Kopfabschnitts über die Hydromaschine und möglicherweise einen damit verbundenen Elektromotor ist, dass eine kompaktere Bauweise des Komplettsystems durch Ausnutzung von einem freien Platz innerhalb der Systemgrenze erreicht wird. Mit anderen Worten kann durch das Ragen der Außengeometrie über den Pumpenträger und/oder Elektromotor eine Kompaktheit des Systems und eine Materialeinsparung erfolgen. Der Abschnitt des Kopfabschnitts, der die Hydromaschine überragt, insbesondere in Richtung Triebwerksachse oder Motorachse, kann zur kompakten Aufnahme von Leitungszügen und Komponenten dienen.

Mit anderen Worten beinhaltet der Hydraulikblock Tankanschlüsse, wie beispielsweise den Rücklaufanschluss, welcher sich am Kopfabschnitt, insbesondere an dessen Oberseite, die in Richtung zu einer Maschine und/oder zu einem Hydraulikzylinder angeordnet sind und an der Unterseite mit dem Tank verbindbar sind, insbesondere indem sich davon weg erstreckende Leitungen in den Tank eintauchen.

Offenbart ist ein Hydraulikblock, der in drei horizontale Abschnitte gegliedert ist. Ein Blockabschnitt ist als Fußabschnitt ausgebildet, der Tankanschlüsse aufweist, insbesondere an der Unterseite. Ein Blockabschnitt ist als Mittelabschnitt ausgebildet, in oder an dem ein Pumpentriebwerk anordenbar ist. Ein weiterer Blockabschnitt ist als Kopfabschnitt ausgebildet, der zum Anschluss von zumindest einem Ventil und von zumindest einem Hydraulikanschluss dient.

### Kurze Beschreibung der Zeichnungen

Ein bevorzugtes Ausführungsbeispiel der Erfindung wird im Folgenden anhand schematischer Zeichnungen näher erläutert. Es zeigen:
Figur 1 in einer perspektivischen Darstellung den Hydraulikblock gemäß einem ersten Ausführungsbeispiel,
Figur 2 in einer Seitenansicht den Hydraulikblock gemäß dem Ausführungsbeispiel, wobei ein Ausbruch im Bereich eines Pumpentriebwerks dargestellt ist,
Figur 3 und 4 jeweils eine perspektivische Darstellung des Hydraulikblocks gemäß dem Ausführungsbeispiel,
Figur 5 eine teiltransparente Darstellung des Hydraulikblocks gemäß dem Ausführungsbeispiel, und
Figur 6 schematisch den Hydraulikblock gemäß dem Ausführungsbeispiel.

### Detaillierte Beschreibung der bevorzugten Ausführungsformen

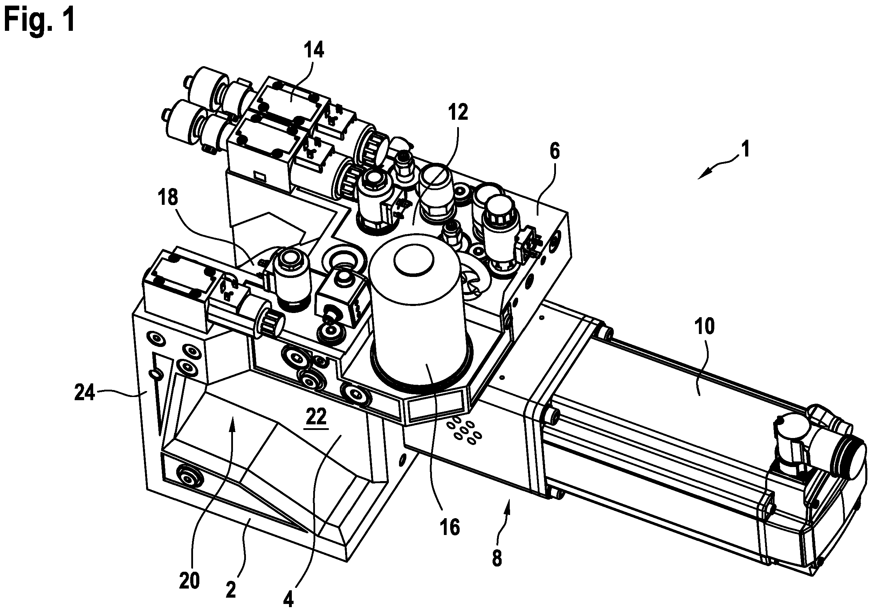

Figur 1 zeigt einen Hydraulikblock 1. Dieser hat einen Fußabschnitt 2, einen Mittelabschnitt 4 und einen Kopfabschnitt 6. Am Mittelabschnitt 4 ist eine Hydraulikpumpe 8 vorgesehen, die von einem Elektromotor 10 antreibbar ist. An einer Oberseite 12 des Kopfabschnitts 6 ist eine Vielzahl von Ventilen 14 vorgesehen, wobei der Einfachheit halber nur eines mit einem Bezugszeichen versehen ist. Außerdem ist ein Filter 16 für ein Fluid angeordnet. Des Weiteren ist vom Kopfabschnitt 6 her eine Schrägfläche 18 des Mittelabschnitts 4 zugänglich. Der Mittelabschnitt 4 ist im Vergleich zum Kopfabschnitt 6 und Fußabschnitt 2 mit einer Aussparung 20 von zwei Seiten her zurückgestuft. Hierdurch ist eine Mittelstrebe 22 und eine seitliche Strebe 24 beim Mittelabschnitt 4 ausgebildet.

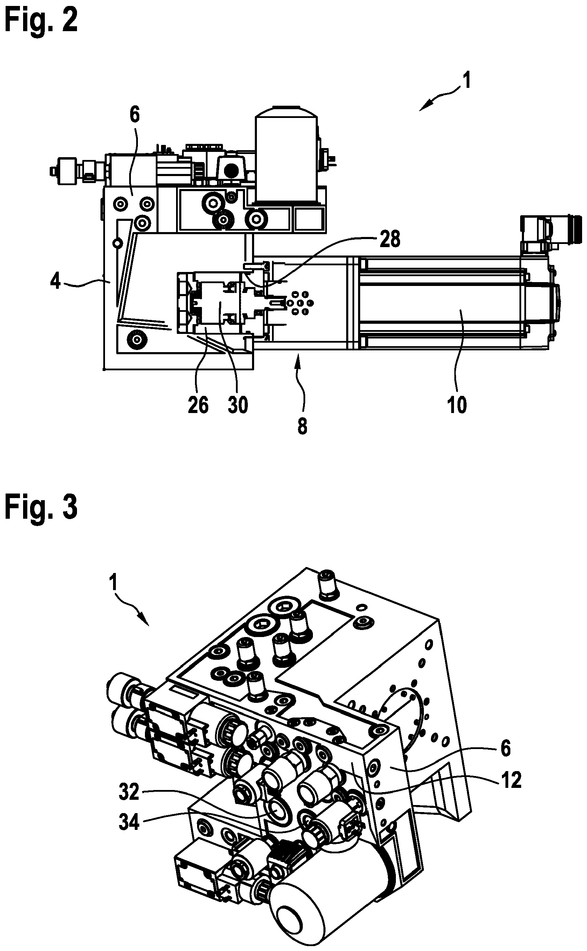

Gemäß Figur 2 ist in der Seitenansicht und im Ausbruch des Hydraulikblocks 1 erkennbar, dass im Mittelabschnitt 4 eine Aufnahme 26 mit einer Aufnahmeöffnung 28 zur Aufnahme eines Pumpentriebwerks 30 ausgebildet ist. Des Weiteren ist erkennbar, dass der Kopfabschnitt 6 über die Aufnahmeöffnung 28 kragt. Hierdurch wird zum einen die Pumpe durch den Kopfabschnitt geschützt und zum anderen wird der Kopfabschnitt 6 erweitert in einer Richtung, in der die Hydraulikpumpe 8 und der Elektromotor 10 kragen. Dies führt zu einem geringen Bauraumbedarf, da in dieser Richtung beispielsweise in einer übergeordneten Maschine praktisch kein zusätzlicher Bauraum beansprucht wird.

Gemäß Figur 3 sind am Hydraulikblock 1 an der Oberseite 12 des Kopfabschnitts 6 ein Rücklaufanschluss 32 und ein Sauganschluss 34 ausgebildet.

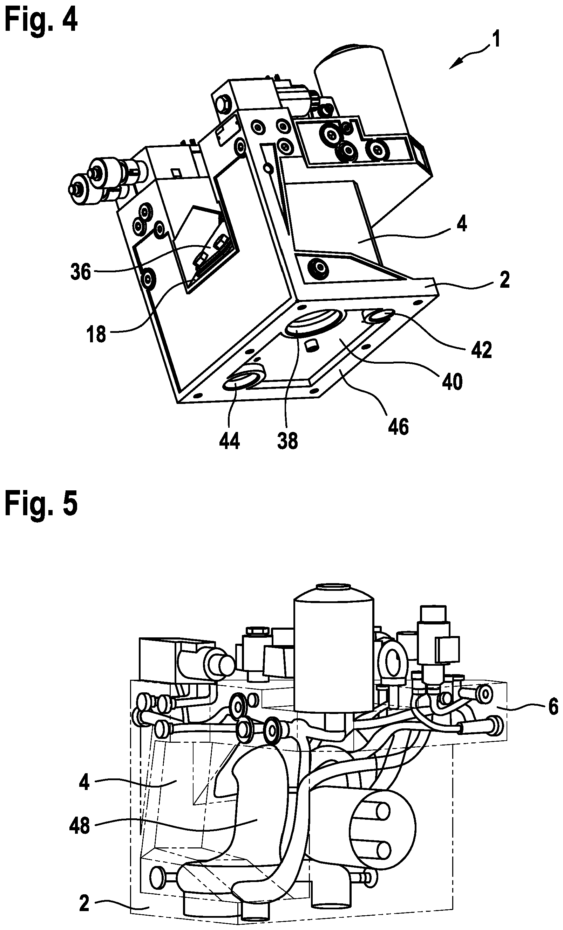

Gemäß Figur 4 ist die Schrägfläche 18 des Mittelabschnitts 4 erkennbar. Diese ist von oben und von der Seite zugänglich. Die Schrägfläche 18 weist nach oben und zur Seite. Des Weiteren weist die Schrägfläche 18 einen großvolumigen Anschluss 36 für einen einen großen Querschnitt aufweisenden Durchleitungskanal auf. Der Anschluss 36 ist über den Durchleitungskanal des Hydraulikblocks 1 mit einem Ablaufanschluss verbunden, der an einer Unterseite 40 des Fußabschnitts 2 ausgebildet ist. An der Unterseite 40 ist des Weiteren ein Rücklaufanschluss 42 vorgesehen, der über einen Kanal mit dem Rücklaufanschluss 32 aus Figur 3 verbunden ist. Außerdem ist an der Unterseite 40 ein Sauganschluss 44 ausgebildet, der über einen Kanal mit dem Sauganschluss 34 der Oberseite 12, siehe Figur 3, verbunden ist.

Gemäß Figur 4 hat die Unterseite 40 einen Flansch mit einer unterseitigen Flanschfläche 46, die rahmenförmig die Anschlüsse 38, 42 und 44 umfasst. In der Flanschfläche 46 sind Befestigungsmittel vorgesehen, um den Hydraulikblock 1 beispielsweise mit einer Tragstruktur und/oder mit einem Tank zu verbinden. Von den Anschlüssen 38, 42 und 44 können, insbesondere formstabile, Leitungen nach unten weg kragen. Diese können des Weiteren in einen unter dem Hydraulikblock 1 anordenbaren Hydrauliktank einkragen, insbesondere in eine Öffnung des Hydrauliktanks. Vorzugsweise kragen die Leitungen frei in den Hydrauliktank ein. Somit ist der Hydrauliktank 1 weitestgehend entkoppelt von mechanischen Beanspruchungen, die durch diese Einflüsse auftreten können. Die mechanischen Beanspruchungen werden somit vom Hydraulikblock 1 aufgenommen. Der Hydrauliktank kann somit vereinfacht ausgestaltet sein.

Gemäß Figur 5 ist der großvolumige Durchleitungskanal 48 erkennbar erkennbar. Dieser erstreckt sich durch den Mittelabschnitt 4 und durch den Fußabschnitt 2, wodurch der Kopfabschnitt davon entkoppelt ist.

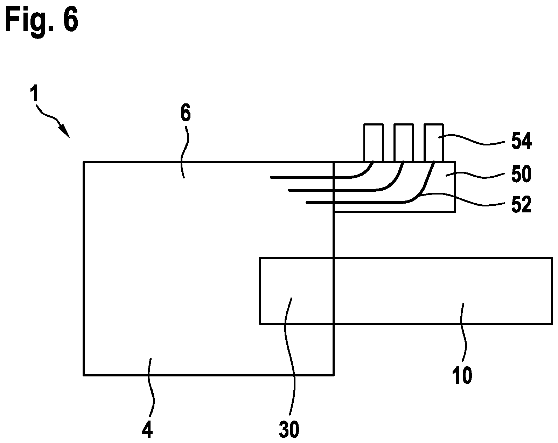

Gemäß Figur 6 ist der Hydraulikblock 1 schematisch in einer Seitenansicht dargestellt. Es ist erkennbar, dass das Pumpentriebwerk 30 im Mittelabschnitt 4 ausgebildet ist. Der das Triebwerk antreibende Elektromotor 10 schließt sich gemäß Figur 6 direkt an den Hydraulikblock 1 an. Außerdem ist schematisch eine Auskragung 50 des Kopfabschnitts 6 ersichtlich, die diesen horizontal erweitert. In der Auskragung 50, die den Elektromotor 10 überragt, können hydraulische Kanäle 52 ausgebildet sein und auf einer Oberseite können Ventile 54 angeordnet sein.

## Patentansprüche

1. Hydraulikblock, wobei dieser in drei übereinander angeordnete Blockabschnitte (2, 4, 6) gegliedert ist, wobei ein Blockabschnitt als Fußabschnitt (2) ausgebildet ist, der einen Rücklaufanschluss (42) und einen Sauganschluss (44) hat, wobei ein Blockabschnitt als Mittelabschnitt (4) ausgebildet ist, der eine Aufnahmeöffnung (28) für ein Pumpentriebwerk (30) hat, und wobei ein Blockabschnitt als Kopfabschnitt (6) ausgebildet ist, auf den zumindest ein Ventil (14) einer hydraulischen Steuerung und zumindest ein Hydraulikanschluss (32, 34) vorgesehen sind.

2. Hydraulikblock nach Anspruch 1, wobei dieser durch ein 3D-Druckverfahren, insbesondere durch ein Gussverfahren mit einem 3D-Sandkerndruckverfahren hergestellt ist.

3. Hydraulikblock nach Anspruch 1 oder 2, wobei der Fußabschnitt (2) eine Unterseite (40) hat, an der der Rücklaufanschluss (42) und der Sauganschluss (44) ausgebildet sind.

4. Hydraulikblock nach Anspruch 3, wobei in der Unterseite (40) ein Ablaufanschluss (38) ausgebildet ist, dessen Querschnitt größer als der Querschnitt des Rücklaufanschlusses (42) ist.

5. Hydraulikblock nach einem der vorhergehenden Ansprüche, wobei der Mittelabschnitt (4) zurückgesetzt ist, wodurch eine Mittelstrebe (22) gebildet ist.

6. Hydraulikblock nach einem der vorhergehenden Ansprüche, wobei der Mittelabschnitt (4) eine äußere Schrägfläche (18) aufweist, die nach oben und zur Seite weist, wobei die Schrägfläche (18) einen Anschluss (36) für einen Durchleitungskanal (48) aufweist, der im Ablaufanschluss (38) mündet.

7. Hydraulikblock nach einem der vorhergehenden Ansprüche, wobei über die Aufnahmeöffnung (28) eine Aufnahme (26) für das Pumpentriebwerk (30) vorgesehen ist, wobei der Hydraulikblock (1) hinsichtlich seiner hydraulischen Kerngeometrie für das Pumpentriebwerk (30) derart ausgestaltet ist, dass Pumpentriebwerke (30) mit unterschiedlicher Pumpenbaugröße verwendbar sind, wobei die Aufnahme (26) eine derartige Größe aufweist, dass in diese zumindest zwei unterschiedliche Pumpenbaugrößen aufnehmbar sind oder wobei die Größe der Aufnahme (26) an eine jeweilige Pumpengröße angepasst ist.

8. Hydraulikblock nach Anspruch 7, wobei in die Aufnahme (26) eine Anschlussplatte eingelegt ist, die die richtige Dimensionierung zum jeweils gewählten Pumpentriebwerk (30) herstellt.

9. Hydraulikblock nach einem der vorhergehenden Ansprüche, wobei der Kopfabschnitt (6) über den Mittelabschnitt (4) auskragt und dachförmig die Aufnahmeöffnung (28) überragt.

10. Verfahren zur Herstellung des Hydraulikblocks gemäß einem der vorhergehenden Ansprüche mit den Schritten:
- Herstellen einer Grundform des Hydraulikblocks (1) mittels eines 3D-Druckverfahrens,
- spanenden Bearbeitung von Schnittstellen und/oder Hydraulikanschlüssen und/oder von Ventilsitzen und/oder von Dichtflächen des Hydraulikblocks (1).

11. Verfahren zur Herstellung des Hydraulikblocks gemäß Anspruch 10, wobei das Herstellen der Grundform des Hydraulikblocks (1) umfasst:
- Herstellen einer Gussform mit einem Kern und zumindest einer Wandfläche einer Außengeometrie des Hydraulikblocks mittels eines 3D-Sandkerndruckverfahrens,
- Abgießen der Gussform mit Gussmaterial, insbesondere mit Gusseisen, insbesondere mit duktilem Gusseisen.
